# FASCICULE DE BREVET EUROPEEN

(11) **EP 2 473 325 B1**
(45) Date de publication et mention de la délivrance du brevet: **01.01.2020**
(21) Numéro de dépôt: 10763746.4
(22) Date de dépôt: 25.08.2010
(51) Int. Cl.: B27D 1/08, B29C 45/14

(54) **PROCÉDÉ DE FABRICATION D'UN HABILLAGE, NOTAMMENT POUR VÉHICULE AUTOMOBILE, COMPRENANT UN REVÊTEMENT POSSÉDANT AU MOINS UNE COUCHE LIGNEUSE ET UNE COUCHE DE RENFORT D'ENVERS**
VERFAHREN ZUR HERSTELLUNG VON VERKLEIDUNGSTEILEN INSBESONDERE FÜR DEN FAHRZEUGINNENRAUM MIT MINDESTENS EINER HOLZARTIGEN SCHICHT UND EINER VERSTEIFUNGSSCHICHT AUF DER RÜCKSEITE
MANUFACTURING PROCESS FOR AN INTERIOR, IN PARTICULAR A VEHICLE INTERIOR, COMPRISING A COVER LAYER WITH AS A MINIMUM A WOODEN LAYER AND A REINFORCING LAYER ON THE REVERSE SIDE

(30) Priorité: 31.08.2009 FR 0955925
(43) Date de publication de la demande: 11.07.2012
(73) Titulaire: Faurecia Intérieur Industrie, 92000 Nanterre (FR)
(72) Inventeur: PICCIN, Hugo, F-75019 Paris (FR); DURAND, Nathalie, F-95800 Cergy (FR)
(74) Mandataire: Lavoix
(86) Numéro de dépôt international: PCT/FR2010/051770
(87) Numéro de publication internationale: WO 2011/023901

(56) Documents cités:
- EP-A1- 1 985 426
- WO-A1-2009/045202
- DE-A1-102007 024 529
- DE-A1-102007 024 530
- FR-A- 899 117
- FR-A- 1 528 176
- US-A1- 2005 241 757
- US-A1- 2007 160 799

## Description

La présente invention concerne un procédé de fabrication d'un habillage, notamment un habillage intérieur de véhicule automobile.

Pour des raisons esthétiques, on souhaite fournir des habillages munis d'un revêtement possédant une feuille de bois et mis en forme pour lui conférer une forme tridimensionnelle.

FR 2 922 137 divulgue un revêtement comprenant une feuille de bois munie d'une couche de renfort souple collée sur l'envers de la feuille de bois, la couche de renfort étant un textile telle qu'un tissu ou un non-tissé, un papier ou une feuille de caoutchouc, le revêtement comprenant en outre une couche de protection sur l'endroit de la feuille de bois, possédant des propriétés d'élasticité pour faciliter la mise en forme du revêtement.

Il peut s'avérer nécessaire de découper le revêtement pour former ses bords ou pour y ménager une ouverture, par exemple pour y insérer un interrupteur électrique ou une commande d'ouverture d'une porte. Les bords découpés peuvent présenter des défauts d'aspect du fait de la nature fibreuse de la feuille de bois et éventuellement de la couche de renfort.

Ces défauts peuvent être traités par exemple par l'application locale d'une résine sur les bords découpés. Néanmoins, ces opérations sont difficiles à automatiser et doivent donc être effectuées manuellement.

Sinon, ces bords découpés peuvent être masqués par des enjoliveurs. Néanmoins, ces enjoliveurs sont susceptibles de nuire à l'esthétique et à la qualité perçue et engendrent forcément des coûts supplémentaires.

WO 2009/045202 A1 divulgue un procédé de fabrication d'un habillage intérieur de véhicule automobile.

EP 1 985 426 A1 divulgue un procédé de fabrication d'un revêtement stratifié dans lequel une couche de placage en bois et imprégnée de résine, séchée, puis empilée avec des couches de cœur entre deux plaques, l'empilement étant pressé à chaud dans une presse pour former un revêtement unitaire.

FR 899 117 A divulgue un procédé de fabrication d'un revêtement dans lequel un placage en bois est disposé dans un moule puis un support est moulé dans le moule.

DE 10 2007 024 530 A1 divulgue un procédé de fabrication d'un habillage comprenant un support, un insert et un revêtement, dans lequel l'insert et le revêtement sont disposés dans une presse ou un moule puis le support est mis en forme dans la presse ou le moule.

FR 1 528 176 A1 divulgue un procédé de fabrication d'un habillage comprenant un support et un revêtement constitué d'une feuille de placage et d'une couche de renfort textile contrecollée sur la feuille de placage avec une colle thermodurcissable qui est séchée avant de mettre en forme le revêtement.

FR 2 922 137 A1 divulgue un procédé de fabrication d'un habillage comprenant le découpage puis le collage d'une feuille de revêtement formée d'une feuille de bois portée par un support souple sur une pièce, avec mise en pression contre la pièce.

US 2005/0241757 A1 divulgue un procédé de fabrication d'un habillage de toit comprenant un ensemble formé d'une couche centrale recouverte de couches de renfort, muni d'un côté d'une face non visible d'une couche de protection et d'un côté d'une face visible d'une couche barrière et d'un revêtement décoratif, les différentes couches et le revêtement décoratif étant assemblés par passage entre une paire de rouleaux puis mise en forme dans une presse à chaud

Un but de l'invention est de proposer un procédé de fabrication permettant la mise en forme du revêtement tout en diminuant les défauts d'aspect des bords découpés.

A cet effet, l'invention propose un procédé de fabrication d'un habillage selon la revendication 1. Des modes de mise en œuvre particuliers sont définis aux revendications 2 à 6.

L'invention sera mieux comprise à la lecture de la description qui va suivre, donnée uniquement à titre d'exemple, et faite en se référant aux dessins annexés, sur lesquels :
- la figure 1 est une vue en coupe partielle d'un habillage intérieur de véhicule automobile comprenant un support en matière plastique et un revêtement d'aspect ; et
- les figures 2 et 3 sont des vues schématiques en coupe d'une presse de thermocompression, illustrant différentes étapes d'un procédé de fabrication de l'habillage de la figure 1, conforme à l'invention.

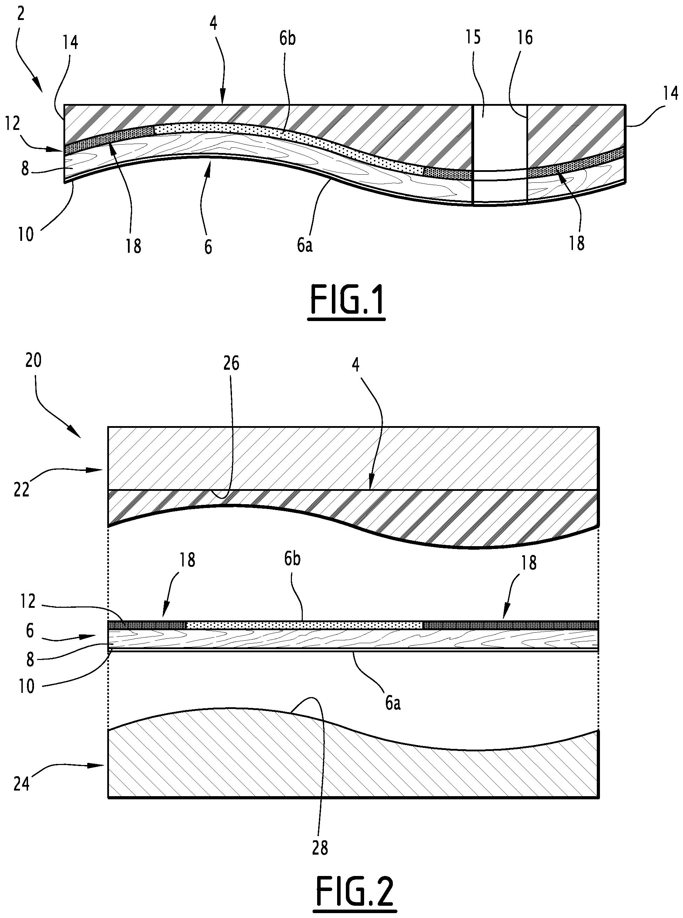

Telle que représenté sur la figure 1, l'habillage 2 intérieur de véhicule automobile comprend un support 4 en matière plastique et un revêtement 6 d'aspect recouvrant le support 4.

Selon l'invention, le revêtement 6 est disposé sur la face visible de l'habillage 2. Il comprend une face avant 6a visible tournée du côté opposé au support 4, et une face arrière 6b en contact avec le support 4.

Le revêtement 6 est stratifié et comprend au moins une couche ligneuse 8 en bois naturel. Tel que représenté sur la figure 1, le revêtement 6 comprend une seule couche ligneuse 8. En option, le revêtement 6 comprend plusieurs couches ligneuses 8 superposées et collées ensemble.

Le revêtement 6 comprend une couche de protection 10 recouvrant la couche ligneuse 8 du côté de la face avant 6a.

La couche de protection 10 a pour fonction de protéger la couche ligneuse 8, notamment contre les radiations ultraviolet pouvant provoquer un vieillissement accélérer de la couche ligneuse 8. La couche de protection 10 est par exemple une résine de synthèse, par exemple un vernis, et est colorée, transparente ou translucide.

La couche de protection 10 est appliquée par exemple par projection sur l'endroit de la couche ligneuse 8.

Le revêtement 6 comprend une couche de renfort 12 souple recouvrant la couche ligneuse 8 du côté de la face arrière 6b.

La couche de renfort 12 a pour fonction de renforcer la couche ligneuse 8 sur son envers et de favoriser la liaison du revêtement 6 avec le support 4 lors de la fixation de ce dernier sur l'envers du revêtement 6.

La couche de renfort 12 est poreuse. Il s'agit par exemple d'une couche de matériau textile, notamment un tissu ou un non-tissé, un papier ou une feuille de caoutchouc.

La couche de renfort 12 est par exemple contrecollée sur l'envers de la couche ligneuse 8.

Un tel revêtement 6 est nommé parfois complexe ligneux stratifié, du fait de la superposition de couches incluant une couche ligneuse.

Tel qu'illustré sur la figure 1, l'habillage 2 comprend des bords marginaux 14 découpés et un orifice 15 délimité par un bord périphérique 16 découpé.

La couche de renfort 12 est imprégnée d'une résine thermodurcissable. La couche de renfort 12 est imprégnée de résine thermodurcissable au moins dans les zones de découpe 18 du revêtement 6. Selon l'invention, la couche de renfort 12 est imprégnée seulement dans les zones de découpe 18.

La résine thermodurcissable est appliquée sur l'envers de la couche de renfort 12 ou entre la couche de renfort 12 et l'envers de la couche ligneuse 8, lors de la fabrication du revêtement 6.

La résine thermodurcissable imprègne au moins la couche de renfort 12, et peut en pratique imprégner également la couche ligneuse 8.

La résine thermodurcissable a pour fonction de rendre le revêtement plus homogène dans les zones imprégnées en comblant les vides de la couche de renfort et éventuellement de la couche ligneuse, et de durcir le revêtement dans les zones imprégnées pour obtenir des bords découpés plus nets.

La résine utilisée possède après durcissement un module d'Young de préférence compris entre 1.500 et 7.000 MPa.

La résine thermodurcissable est prévue pour durcir du fait du thermoformage du revêtement 6, i.e. sous l'effet de la chaleur apportée au revêtement pendant son thermoformage.

La résine thermodurcissable est par exemple choisie parmi : polyester, époxyde, phénolique, polyimide, mélamine, caoutchouc vulcanisé.

Selon l'invention, on fournit le revêtement 6 comprenant la couche ligneuse 8, la couche de protection 10 et la couche de renfort 12 imprégnée par la résine thermodurcissable non durcie, ni polymérisée, ni réticulée. Par ailleurs, on fournit le support 4, par exemple par moulage par injection de matière plastique dans un moule de moulage par injection approprié.

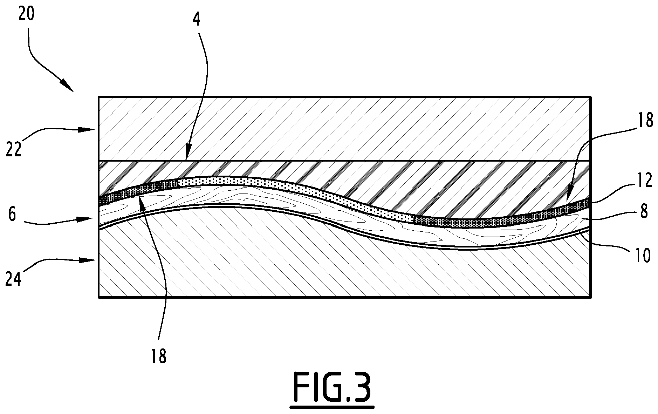

Ensuite, on thermoforme le revêtement 6 et on le fixe sur le support 4 par thermocompression du revêtement 6 contre le support 4 dans une presse à chaud comme illustré sur les figures 2 et 3.

Telle qu'illustrée sur les figures 2 et 3, la presse 20 une partie supérieure 22 et une partie inférieure 24 complémentaires et mobiles l'une par rapport pour ouvrir la presse 20 par écartement des parties supérieure 22 et inférieure 24 (figure 2) et fermer la presse 20 par rapprochement des parties supérieure 22 et inférieure 24 (figure 3)

La partie supérieure 22 comprend une surface d'appui 26 de réception du support 4 formé préalablement.

La partie inférieure 24 comprend une surface de formage 28 prévue pour la mise en forme du revêtement 6 appliqué en pression contre cette surface de formage 28. Elle possède une forme tridimensionnelle correspondant à la forme tridimensionnelle finale souhaitée pour le revêtement 6. La surface de formage 28 peut notamment être une surface non développable.

La surface d'appui 26 et la surface de formage 28 sont disposées en regard.

Selon le procédé de fabrication, on ouvre la presse 20, on dispose l'envers du support 4 en appui contre la surface d'appui 26, et on dispose Le revêtement 6, initialement sensiblement plat, est entre le support 4 et la surface de formage 28 (figure 2), la face arrière 6b et la couche de renfort 12 du revêtement 6 étant tournées vers le support 4.

Ensuite, selon l'invention, on thermoforme le revêtement 6 et on thermocomprime le revêtement 6 contre le support 6 en fermant la presse 20. Du fait de la fermeture de la presse 20, le support 4 est appliqué contre le revêtement 6, ce qui permet la thermocompression, et applique le revêtement 6 contre la surface de formage 28, ce qui permet le thermoformage du revêtement entre le support 4 et la surface de formage 6.

La vitesse de fermeture de la presse 20 est la vitesse de rapprochement des parties 22, 24 de presse. En fin de course, i.e. de 5 mm à 10 mm avant la fermeture de la presse 20, la vitesse de fin de course est de préférence comprise en 0,5 mm/s et 1 mm/min pour permettre au revêtement 6 de monter en température.

Pendant ces opérations, la presse 20 est maintenue à une température favorisant la fixation du support 4 sur la couche de renfort 12. Cette température est comprise par exemple entre 70 et 180 °C.

Lors du thermoformage et de la thermocompression, la résine thermodurcissable durcit.

On effectue les découpes nécessaires dans le revêtement 6 après le durcissement de la résine thermodurcissable.

Les bords 14 du revêtement sont découpés dans la presse 20, après le durcissement de la résine thermodurcissable, par exemple à l'aide de couteaux prévus à cet effet, ou après avoir retiré l'habillage 2 de la presse 20.

L'orifice 15 est découpé par exemple par fraisage après avoir retiré l'habillage 2 de la presse 20.

La résine thermodurcissable apporte de l'homogénéité en formant un liant dans la couche de renfort 12 ou alternativement dans la couche de renfort 12 et dans la couche ligneuse 8, et augmente le module d'Young dans les régions de découpe 18 imprégnées. Il en résulte que les bords découpés présenteront une découpe plus franche et plus nette. Ainsi, il est possible de laisser ces bords apparents, sans traitement ultérieur coûteux et sans ajout d'enjoliveur.

Le procédé de fabrication est mis en œuvre de manière simple, sur des thermopresses déjà existantes dans la mesure où la résine thermodurcissable durcit du fait de la chaleur apportée lors de la thermocompression. En outre, la résine thermodurcissable non durcie ne s'oppose pas à la mise en forme du revêtement.

## Revendications

1. Procédé de fabrication d'un habillage, notamment un habillage intérieur de véhicule automobile, comprenant un revêtement d'aspect (6) stratifié et un support (4), le revêtement (6) possédant une face avant (6a) visible et une face arrière (6b) en contact avec le support (4), le revêtement (6) comprenant au moins une couche ligneuse (8) et une couche de renfort (12) poreuse adhérée sur la couche ligneuse (8) du côté de la face arrière (6b), dans lequel :
- on fournit le revêtement (6) comprenant la couche de renfort (12) imprégnée avec une résine thermodurcissable au moins dans une région de découpe (18), et, par ailleurs, on fournit le support (4), puis
- on thermoforme le revêtement (6) et on fixe le revêtement sur le support (4) par thermocompression du revêtement (6) contre le support (4) dans une presse (20) à chaud, le support (4) étant appliqué contre le revêtement (6) du fait de la fermeture de la presse (20), la résine thermodurcissable étant prévue pour durcir du fait du thermoformage du revêtement (6), puis
- on découpe le revêtement (6) dans la région de découpe après le thermoformage du revêtement (6) et le durcissement de la résine thermodurcissable,
**caractérisé en ce que** la couche de renfort (12) est imprégnée seulement dans chaque région de découpe (18).

2. Procédé selon la revendication 1, dans lequel on fournit la couche de renfort (12) sous la forme d'un matériau textile tissé ou non-tissé.

3. Procédé selon la revendication 1 ou 2, dans lequel on imprègne la couche de renfort avec une résine choisie parmi : polyester, époxyde, phénolique, polyimide, mélamine, caoutchouc vulcanisé.

4. Procédé selon l'une quelconque des revendications précédentes, dans lequel, de 5 mm à 10 mm avant la fermeture de la presse (20), la vitesse de fermeture de la presse (20) est de préférence comprise en 0,5 mm/s et 1 mm/min.

5. Procédé selon l'une quelconque des revendications précédentes, dans lequel le support est formé préalablement.

6. Procédé selon l'une quelconque des revendications précédentes, dans lequel le support est formé par moulage par injection.

## Patentansprüche

1. Verfahren zur Herstellung einer Verkleidung, insbesondere einer Innenverkleidung eines Kraftfahrzeugs, die aufweist einen Erscheinungsbild-Belag (6) in Schichtform und eine Abstützung (4), wobei der Belag (6) eine sichtbare vordere Seite (6a) und eine hintere Seite (6b) hat, die in Kontakt mit der Abstützung (4) ist, wobei der Belag (6) wenigstens eine Holzschicht (8) und eine poröse Verstärkungsschicht (12) aufweist, die seitens der hinteren Seite (6b) auf die Holzschicht (8) geklebt ist, wobei:
- man den Belag (6) bereitstellt, der die Verstärkungsschicht (12) aufweist, die mit einem wärmeaushärtbaren Harz imprägniert ist zumindest in einem Zuschneidbereich (18), und man außerdem die Abstützung (4) bereitstellt, worauf
- man den Belag (6) wärmeformt und man den Balg auf der Abstützung (4) fixiert durch Wärmekompression des Belags (6) gegen die Abstützung (4) in einer Wärmepresse (20), wobei die Abstützung (4) gegen den Belag (6) appliziert wird in Folge des Schließens der Presse (20), wobei das wärmeaushärtbare Harz vorgesehen ist, um auszuhärten in Folge der Wärmeformung des Belags (6), worauf
- man den Belag (6) im Zuschneidbereich schneidet nach der Wärmeformung des Belags (6) und der Aushärtung des wärmeaushärtbaren Harzes,
**dadurch gekennzeichnet, dass** in dem Belag die Verstärkungsschicht (12) nur in jedem Zuschneidbereich (18) imprägniert ist.

2. Verfahren gemäß Anspruch 1, wobei man die Verstärkungsschicht (12) bereitstellt in Form eines Gewebe- oder Vlies-Textils.

3. Verfahren gemäß Anspruch 1 oder 2, wobei man die Verstärkungsschicht mit einem Harz imprägniert, das ausgewählt ist aus: Polyester, Epoxid, Phenol, Polyimid, Melamin, vulkanisiertem Kautschuk.

4. Verfahren gemäß irgendeinem der vorhergehenden Ansprüche, wobei, 5 mm bis 10 mm vor dem Schließen der Presse (20), die Schließgeschwindigkeit der Presse (20) bevorzugt zwischen 0,5 mm/s und 1 mm/min liegt.

5. Verfahren gemäß irgendeinem der vorhergehenden Ansprüche, wobei die Abstützung vorgefertigt wird.

6. Verfahren gemäß irgendeinem der vorhergehenden Ansprüche, wobei die Abstützung durch Spritzgießen geformt wird.

## Claims

1. A method for manufacturing a lining, in particular an interior lining for a motor vehicle, comprising a stratified visible coating (6) and a substrate (4), the coating (6) comprising a visible front surface (6A) and a rear surface (6B) in contact with the substrate (4), the coating (6) comprising at least one ligneous layer (8) and one porous reinforcement layer (12) adhered to the ligneous layer (8) on the side of the rear surface (6B), in which:
- the coating (6) comprising the reinforcement layer (12) impregnated with a thermosetting resin at least in one cutting region (18) is provided, and, besides, the substrate (4) is provided, then
- the coating (6) is thermoformed and fixed to the substrate (4) by thermocompression of the coating (6) against the substrate (4) in a hot press (20), the substrate (4) being pressed against the coating (6) due to closing of the press (20), the thermosetting resin being provided to set due to the thermoforming of the coating (6), then
- the coating (6) is cut in the cutting region (18) after the thermoforming of the coating (6) and the setting of the thermosetting resin,
**characterized in that** the reinforcement layer (12) is impregnated only in each cutting zone (18).

2. The method according to claim 1, wherein the reinforcement layer (12) is provided in the form of a woven or nonwoven textile material.

3. The method according to claim 1 or 2, wherein the reinforcement layer is impregnated with a resin chosen from amongst: polyester, epoxide, phenolic, polyimide, melamine, vulcanized rubber.

4. The method according to any one of the preceding claims, wherein 5 mm to 10 mm before closing of the press (20), the closing speed of the press (20) is preferably comprised between 0.5 mm/s and 1 mm/min.

5. The method according to any one of the preceding claims, wherein the substrate is formed beforehand.

6. The method according to any one of the preceding claims, wherein the substrate is formed by injection molding.
